# FASCICULE DE BREVET EUROPEEN

(11) **EP 0 486 344 B1**
(45) Date de publication et mention de la délivrance du brevet: **15.03.1995**
(21) Numéro de dépôt: 91402837.8
(22) Date de dépôt: 23.10.1991
(51) Int. Cl.: B60B 17/00, B21D 22/10

(54) **Procédé et dispositif de fabrication d'une roue insonorisée, notamment pour véhicule ferroviaire**
Vorrichtung und Herstellungsverfahren eines geräuschdämpfenden Rades, insbesondere eines Schienenrades
Method and device for the manufacture of a sound-damping wheel, especially for rail vehicles

(30) Priorité: 13.11.1990 FR 9014076
(43) Date de publication de la demande: 20.05.1992
(73) Titulaire: VALDUNES, F-92800 Puteaux (FR)
(72) Inventeur: Demilly, François, F-59240 Dunkerque (FR); Thery, Serge, F-42400 St. Chamond (FR)
(74) Mandataire: Lanceplaine, Jean-Claude

(56) Documents cités:
- EP-A- 0 376 809
- FR-A- 1 586 371
- FR-A- 2 043 641

## Description

La présente invention a pour objet un procédé et un dispositif de fabrication d'une roue insonorisée notamment pour véhicule férroviaire.

La présente invention a également pour objet une roue insonorisée obtenue par ce procédé.

On sait qu'au cours du déplacement d'un véhicule sur des rails, naît, en particulier au contact entre les roues et les rails, un bruit de roulement qui peut se transformer dans les courbes, en un crissement aigu, dû à l'absence de système différentiel.

La cause principale de ce phénomène est le frottement des surfaces métalliques sous charge, qui engendre la vibration des roues.

La forme des roues surtout lorsqu'elles ont une toile mince, favorise l'amplification des vibrations de la toile et l'émission des ondes sonores, au point qu'elles deviennent une gêne pour l'environnement.

Pour éviter ce phénomène, on connait des roues élastiques qui améliorent l'acoustique en tendant à limiter les masses non suspendues. Elles consistent en l'adjonction d'un étage de suspension supplémentaire le plus près possible du contact rail-roue.

Les gains acoustiques apportés par les roues élastiques sont de 2 à 3 décibels sur le bruit de roulement aussi bien en courbe qu'en ligne droite.

Malgré les avantages de ces roues qui sont une diminution de la fatigue des différents éléments du bogie et l'usure des bandages, ce type de roue est d'un coût élevé et la charge admissible est limitée.

L'évolution de la technologie ferroviaire a conduit à de nouvelles solutions du type roues amorties et roues insonorisées.

Toutes deux consistent en l'apport d'une masse réactive tel qu'un polymère, soit au contact de la jante pour les roues amorties, soit au niveau du voile pour les roues insonorisées.

Sur le bruit de crissement en courbe, on obtient un gain de 15 à 25 décibels pour les fréquences caractéristiques pour les roues amorties et de 15 à 20 décibels pour les roues insonorisées, et sur le bruit de roulement un gain nul dans le cas des roues amorties et de 2 à 3 décibels dans le cas des roues insonorisées.

A cet effet, les roues inosonorisées comportent une plaque d'insonorisation appliquée sur le voile de roue. Cette plaque d'insonorisation est formée par une couche de matière plastique s'étendant de la zone du moyeu jusqu'au bord intérieur de la jante, et éventuellement recouverte d'une tôle de recouvrement qui est maintenue en place par l'effet de collage de la matière plastique, ou par fixation mécanique complémentaire au besoin.

Généralement, les roues sont forgées et de manière séparée les plaques d'insonorisation sont matricées par des outils d'emboutissage ayant un profil identique au voile de la roue.

Ensuite, la plaque d'insonorisation ainsi formée est collée sur le voile de roue.

Cette technique utilisée jusqu'à présent nécessite donc plusieurs opérations successives d'où une manutention entre chaque opération et surtout l'usinage d'outils d'emboutissage pour chaque type de roue ce quine permet pas de traiter les roues de différentes dimensions sur les mêmes machines augmentant ainsi les investissements et les coûts.

De plus, cette technique ne permet pas d'obtenir un ajustement parfait de la plaque d'insonorisation sur le voile de la roue et de ce fait une bonne insonorisation de la roue.

La pésente invention a pour but d'éviter ces inconvénients et de proposer un procédé qui permet de fabriquer en série ce type de roues insonorisées et qui offre la possibilité de traiter des roues de dimensions variables sur les mêmes machines, sans interruption de la fabrication.

La présente invention a donc pour objet un procédé de fabrication d'une roue insonorisée notamment pour véhicule ferroviaire comportant au moins une plaque d'insonorisation épousant le voile de la roue et s'étendant de la zone du moyeu jusqu'au bord de la jante, caractérisé en ce que :
- on positionne la roue préalablement forgée dans une presse du type comportant un poinçon formé par un coussin en un matériau élastique,
- on place ladite plaque d'insonorisation sur le coussin,
- on met en forme directement sur le voile de la roue, ladite plaque d'insonorisation par déformation du coussin, ladite roue constituant une matrice.

Selon d'autres caractéristiques :
- on maintient ladite plaque d'insonorisation sur le bord de la jante de la roue pendant la mise en forme sur le voile de ladite roue,
- on colle ladite plaque d'insonorisation simultanément à sa mise en forme sur le voile de la roue,
- on colle ladite plaque d'insonorisation après sa mise en forme sur le voile de la roue.

La présente invention a également pour objet un dispositif de fabrication d'une roue insonorisée notamment pour véhicule ferroviaire, du type comportant au moins une plaque d'insonorisation disposée sur le voile de la roue et s'étendant de la zone du moyeu jusqu'au bord de la jante, caractérisé en ce qu'il comprend un organe support de la roue dans une presse comportant des moyens de formage de ladite plaque d'insonorisation directement sur le voile de la roue qui constitue une matrice de mise en forme de ladite plaque.

Selon d'autres caractéristiques :
- les moyens de formage sont formés par un poinçon constitué d'un coussin en un matériau élastique,
- le coussin en un matériau élastique comporte un serre-flan périphérique de mantien de ladite plaque d'insonorisation sur le bord de la jante de la roue.

L'invention sera mieux comprise à l'aide de la description qui va suivre, donnée uniquement à titre d'exemple et faite en se référant aux dessins annexés, sur lesquels :
- les Figs. 1 à 3 sont des vues schématiques en coupe du dispositif selon l'invention, au cours des étapes de fabrication d'une roue insonorisée,
- les Figs. 4 et 5 sont deux demi-vues schématiques en coupe d'une variante du dispositif selon l'invention.

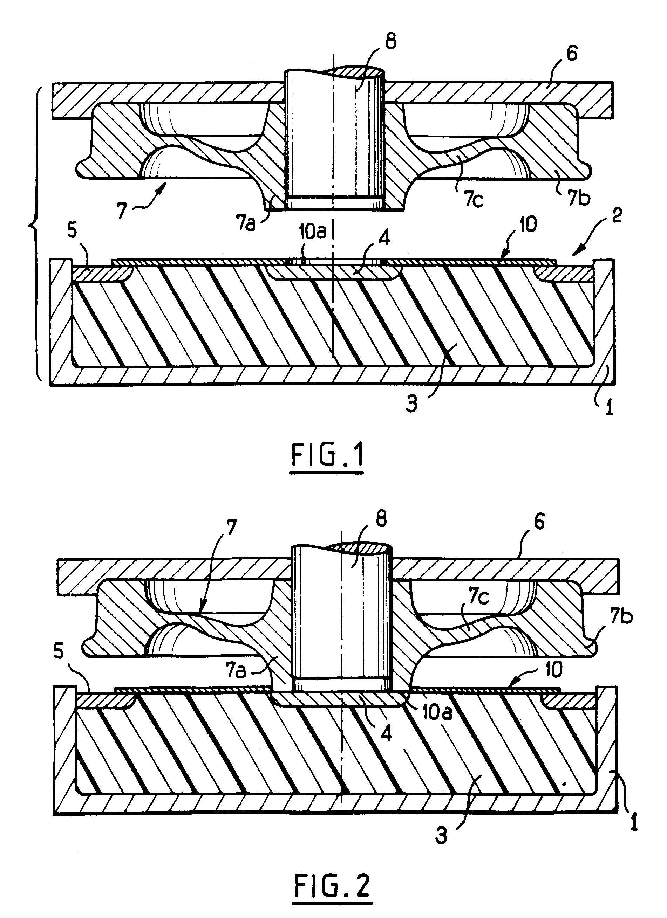

Le dispositif représenté schématiquement aux Figs. 1 à 3 est constitué par une presse comprenant un bac 1 de préférence cylindrique qui forme un logement interne pour un poinçon 2.

Ce poinçon 2 est constitué d'un coussin 3 en un matériau élastique incompressible.

Sur la face supérieure du coussin 3 sont disposés, un appui central 4 et un serre-flan périphérique 5 qui épouse sensiblement le contour du logement interne du bac 1.

L'appui central 4 et le serre-flan périphérique 5 peuvent pénétrer dans le logement interne du bac 1 pour provoquer, comme on le verra ultérieurement le fluage du coussin 3.

Au dessus du bac 1, le dispositif comporte un organe 6 de support et de maintien d'une roue 7, notamment de véhicule ferroviaire, montée sur un axe de centrage 8.

La roue 7, réalisée par forgeage, comporte de manière usuelle un moyeu 7a muni d'un orifice central pour le passage de l'axe de centrage 8, une jante 7b et un voile 7c reliant ledit moyeu à ladite jante.

Le voile 7c est destiné à recevoir une plaque d'insonorisation 10 de forme circulaire et possédant un orifice central 10a.

L'ensemble constitué par le bac 1, le coussin 3, l'appui 4 et le serre-flan 5 est déplaçable verticalement par des moyens appropriés non représentés, tandis que la roue 7 et l'organe 6 de support sont fixes.

Le dispositif ainsi décrit fonctionne de la manière suivante.

Tout d'abord, on pose la plaque d'insonorisation 10 sur le serre-flan 5, ladite plaque reposant également sur la face supérieure du coussin 3.

Le bac 1 et le coussin 3 sont déplacés vers la roue 7 de telle sorte que l'extrémité du moyeu 7a pénètre dans l'orifice 10a de la plaque d'insonorisation 10 et entre en contact avec l'appui central 4 (Fig. 2).

L'appui central 4 assure une protection de la partie centrale du coussin 3.

Le mouvement ascendant du bac 1 et du coussin 3 se poursuit ce qui provoque, sous l'effet de la compression exercée par le moyen 7a et l'appui central 4, le fluage du coussin 3 et par conséquent le serrage de la partie périphérique de la plaque d'insonorisation 10 entre le serre-flan périphérique 5 et la jante 7b.

Cette plaque d'insonoriation 10 est ainsi préformée, puis on réalise le formage définitif de la plaque d'insonorisation 10 sur le voile 7c de la roue 7.

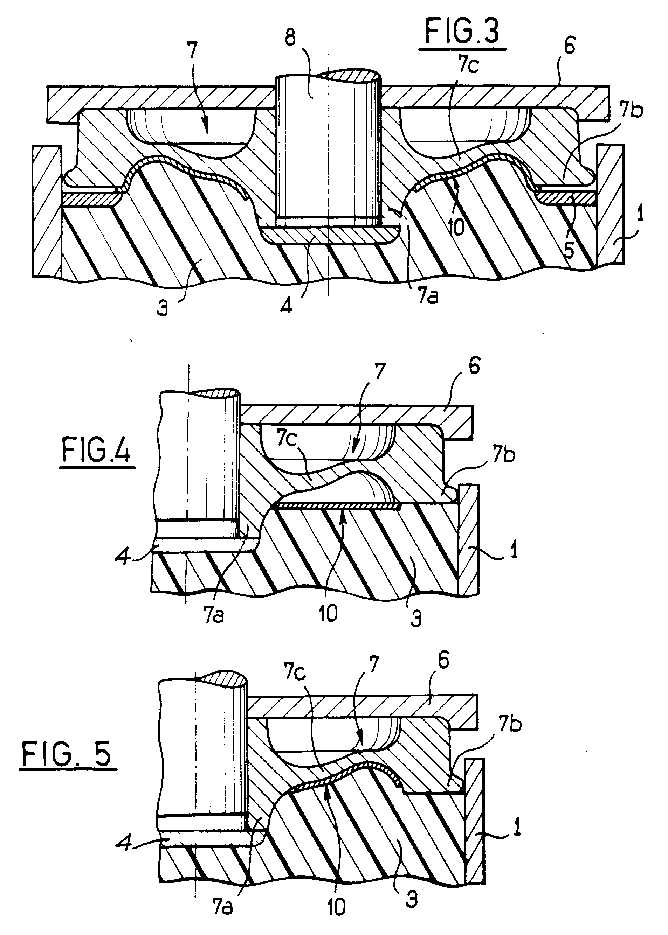

Pour cela, on poursuit le mouvement ascendant du bac 1 et du coussin 3 entrainant, sous l'effet de la compression exercée, d'une part, par le moyeu 7a et l'appui central 4 et, d'autre part, par la jante 7b et le serre-flan périphérique 5, le fluage du coussin 3 qui forme la plaque d'insonorisation 10 selon le galbe du voile 7c et l'applique contre ce voile 7c (Fig. 3).

La roue 7 joue donc le rôle d'une matrice de mise en forme de la plaque d'insonorisation 10.

Au cours de cette phase de formage définitif la partie centrale de le plaque 10 glisse sur le moyeu 7a et la partie périphérique de ladite plaque glisse entre la jante 7b et le serre-flan périphérique 5.

Une fois la plaque 10 formée sur le voile 7c, ladite plaque peut déborder sur le bord de la jante 7b (Fig. 3) ou être complètement insérée entre le moyeu 7a et la jante 7b.

Ensuite, le bac 1, le coussin 3, l'appui central 4 et le serre-flan 5 sont descendus et le coussin 3 reprend sa position initiale comme représentée à la Fig. 1 pour la mise en forme d'une nouvelle plaque d'insonorisation 10.

Cette plaque d'insonorisation 10 est formée par une couche d'un matériau de synthèse tel qu'un polymère par exemple viscoélastique et d'une tôle de recouvrement.

Le polymère est par exemple un matériau thermodurcissable tel qu'une colle liquide à température ambiante ou un matériau thermoplastique solide à température ambiante.

La tôle de recouvrement est par exemple une tôle d'acier ou une tôle sandwich.

D'une manière générale, le polymère est choisi en fonction de ses propriétés acoustiques, mais aussi de ses propriétés de mise en oeuvre comme par exemple ses propriétés d'adhérence sur l'acier, d'emboutissabilité et de durabilité.

Pour l'adhérence de la plaque d'insonorisation 10 sur le voile 7c de la roue 7, deux techniques peuvent être envisagées.

La première, une roue déterminée est montée sur la presse en "matrice" et forme une série de plaques d'insonorisation qui sont ensuite collées sur différentes roues dans une autre étape d'assemblage spécifique.

La seconde, dans un montage en série, chacune des roues est la propre matrice de sa plaque d'insonorisation. La mise en forme et l'adhérence de la plaque d'insonorisation sur la roue sont réalisées simultanément et l'inertie thermique de la roue préforgée peut aider au collage de la plaque d'insonorisation.

Dans ce cas, chaque roue subit, avant sa pose dans le dispositif selon l'invention, un décalaminage à chaud et un sablage pour avoir des surfaces propres à l'assemblage réalisé à faible température sans apport d'énergie supplémentaire.

Le polymère peut être mis sur la tôle de recouvrement, avant ou après la mise en forme de celle-ci; ou sur la roue chaude ou froide ou encore entre la roue et la plaque de recouvrement par injection.

Dans le cas d'une injection, un pressage est nécessaire pour assurer une bonne adhésion des éléments en présence.

Dans le cas des matériaux thermodurcissables, la chaleur rayonnante de la roue permet d'accélérer la réticulation de la résine ce qui est particulièrement intéressant pour une fabrication industrielle à cadence rapide.

Dans le cas des matériaux thermoplastiques, la chaleur rayonnante de la roue permet de fondre le polymère et assurer ainsi une bonne adhésion entre ce polymère et l'acier.

Si la roue est utilisée à froid, un traitement thermique est nécessaire pour assurer une bonne cohésion à l'ensemble sauf si la résine utilisée réticule à température ambiante.

Selon une variante réprésentée aux Fig. 4 et 5, le dispositif comporte un bac 1 contenant un coussin 3 en un matériau élastique et un appui central 4, mais aucun serre-flan.

Dans ce cas, la plaque d'insonorisation 10 est directement posée sur le coussin 3. Au moment du formage, la plaque d'insonorisation 10 est traversée par le cône du moyeu 7a (Fig. 4) et est ensuite formée sur le voile 7c par le fluage du coussin 3 (Fig. 5).

Pour faciliter le glissement de la plaque 10 sur le coussin 3, une peau en un matériau antifriction peut être prévue sur la face supérieure dudit coussin.

Le procédé et le dispositif, selon la présente invention, permettent de pouvoir réaliser en série des roues insonorisées et de limiter les investissements étant donné le peu d'outillages nécessaires, tout en offrant la possibilité de traiter des roues de différentes dimensions sur les mêmes machines en utilisant la roue elle-même comme matrice de mise en forme de la plaque d'insonorisation.

De plus, ils permettent d'obtenir un parfait ajustement entre la plaque d'insonorisation et le voile de la roue du fait de la mise en forme de ladite plaque d'insonorisation directement sur le voile de la roue, même dans le cas d'un défaut de forme dudit voile.

Ainsi, l'homogénéité du collage de la plaque d'insonorisation sur la roue est assurée ce qui permet d'augmenter l'insonorisation de la roue.

## Revendications

1. Procédé de fabrication d'une roue insonorisée (7) notamment pour véhicule ferroviaire comportant au moins une plaque d'insonorisation (10) épousant le voile (7c) de la roue (7) et s'étendant de la zone du moyeu (7a) jusqu'au bord de la jante (7b), caractérisé en ce que :
- on positionne la roue (7) préalablement forgée, dans une presse du type comportant un poinçon (2) formé par un coussin (3) en un matériau élastique,
- on place ladite plaque d'insonorisation (10) sur le coussin (3),
- on met en forme, directement sur le voile (7c) de la roue (7), ladite plaque d'insonorisation (10) par déplacement du coussin (3), ladite roue (7) constituant une matrice.

2. Procédé selon la revendication 1, caractérisé en ce qu'on maintient ladite plaque d'insonorisation (10) sur le bord de la jante (7b) de la roue (7) pendant sa mise en forme sur le voile (7c) de ladite roue.

3. Procédé selon les revendications 1 et 2, caractérisé en ce qu'on colle ladite plaque d'insonorisation (10) simultanément à sa mise en forme sur le voile (7c) de la roue (7).

4. Procédé selon l'une quelconque des revendications 1 à 3, caractérisé en ce qu'on colle ladite plaque d'insonorisation (10) après sa mise en forme sur le voile (7c) de la roue (7).

5. Dispositif de fabrication d'une roue insonorisée (7) notamment pour véhicule ferroviaire du type comportant au moins une plaque d'insonorisation (10) disposée sur le voile (7c) de la roue (7) et s'étendant de la zone du moyeu (7a) jusqu'au bord de la jante (7b) de ladite roue, caractérisé en ce qu'il comprend un organe support (6) de la roue (7) dans une presse comportant des moyens (2) de formage de ladite plaque d'insonorisation (10) directement sur le voile (7c) de la roue (7) qui constitue une matrice de mise en forme de ladite plaque d'insonorisation.

6. Dispositif selon la revendication 5, caractérisé en ce que les moyens de formage sont formés par un poinçon (2) constitué d'un coussin (3) en un matériau élastique.

7. Dispositif selon la revendication 6, caractérisé en ce que le coussin (3) en un matériau élastique comporte un serre-flan périphérique (5) de maintien de ladite plaque d'insonorisation (10) sur le bord de la jante (7b) de la roue (7).

## Claims

1. A method for the manufacture of a sound-damping wheel (7), in particular for rail vehicles, including at least one sound damping plate (10) following the shape of the web (7c) of the wheel (7) and extending from the zone of the hub (7a) as far as the edge of the wheel rim (7b),
characterized in that
- the wheel (7), forged beforehand, is placed into a press of the type including a punching die (2) formed by a pad (3) made of a resilient material,
- the said sound-damping plate (10) is placed on the pad (3),
- the said sound-damping plate (10) is shaped directly on the web (7c) of the wheel (7) by the displacement of the pad (3), the said wheel (7) constituting a die.

2. A method according to claim 1, characterized in that the said sound-damping plate (10) is held on the edge of the wheel rim (7b) of the wheel (7) while it is being shaped on the web (7c) of the said wheel.

3. A method according to claims 1 and 2, characterized in that the said sound-damping plate (10) is bonded at the same time as it is being shaped on the wheel (7).

4. A method according to any one of claims 1 to 3, characterized in that the said sound-damping plate (10) is bonded after it has been shaped on the web (7c) of the wheel (7).

5. A device for the manufacture of a sound-damping wheel (7), in particular for rail vehicles of the type including at least one sound damping plate (10) disposed on the web (7c) of the wheel (7) and extending from the zone of the hub (7a) as far as the edge of the wheel rim (7b) of the said wheel, characterized in that it includes an element (6) for supporting the wheel (7) in a press comprising means (2) for shaping the said sound-damping plate (10) directly on the web (7c) of the wheel (7) which constitutes a die for shaping the said sound-damping plate.

6. A device according to claim 5, characterized in that the forming means are constituted by a punching die (2) constituted by a pad (3) made of a resilient material.

7. A device according to claim 6, characterized in that the pad (3) made of a resilient material includes a circumferential blank holder (5) for holding the said sound-damping plate (10) on the edge of the wheel rim (7b) of the wheel (7).

## Patentansprüche

1. Verfahren zum Herstellen eines geräuschdämpfenden Rades (7), insbesondere für ein Schienenfahrzeug, das wenigstens eine Geräuschdämpfungsplatte (10) aufweist, welche sich an den Körper (7c) des Rades (7) anschmiegt und sich vom Bereich der Nabe (7a) bis zum Rand der Felge (7b) erstreckt, dadurch gekennzeichnet, daß:
- man das zuvor geschmiedete Rad (7) in einer Presse des Typs, der einen Stempel (2) gebildet aus einem Kissen (3) aus einem elastischen Material aufweist, positioniert,
- man die Geräuschdämpfungsplatte (10) auf das Kissen (3) legt,
- man direkt auf dem Körper (7c) des Rades (7) die Geräuschdämpfungsplatte (10) durch Verlagerung des Kissens (3) verformt, wobei das Rad (7) eine Matrize bildet.

2. Verfahren nach Anspruch 1, dadurch gekennzeichnet, daß man die Geräuschdämpfungsplatte (10) während des Verformens auf dem Körper (7c) des Rades (7) an dem Rand der Felge (7b) des Rades (7) hält.

3. Verfahren nach den Anspruchen 1 und 2, dadurch gekennzeichnet, daß man die Geräuschdämpfungsplatte (10) gleichzeitig mit ihrem Verformen auf dem Körper (7c) des Rades (7) verklebt.

4. Verfahren nach einem der Ansprüche 1 bis 3, dadurch gekennzeichnet, daß man die Geräuschdämpfungsplatte (10) nach ihrem Verformen auf dem Körper (7c) des Rades (7) verklebt.

5. Vorrichtung zum Herstellen eines geräuschdämpfenden Rades (7), insbesondere für ein Schienenfahrzeug, des Typs, der wenigstens eine Geräuschdämpfungsplatte (10) aufweist, die auf dem Körper (7c) des Rades (7) angeordnet ist und sich vom Bereich der Nabe (7a) bis zum Rand der Felge (7b) des Rades (7) erstreckt, dadurch gekennzeichnet, daß sie ein Trägerelement (6) für das Rad (7) in einer Presse aufweist, die Mittel (2) zum Verformen der Geräuschdämpfungsplatte (10) direkt auf dem Körper (7c) des Rades (7) umfaßt, welcher eine Matrize zum Verformen der Geräuschdämpfungsplatte bildet.

6. Vorrichtung nach Anspruch 5, dadurch gekennzeichnet, daß die Verformungsmittel durch einen Stempel (2), bestehend aus einem Kissen (3) aus elastischem Material, gebildet sind.

7. Vorrichtung nach Anspruch 6, dadurch gekennzeichnet, daß das Kissen (3) aus elastischem Material eine Umfangs-Klemmscheibe (5) zum Halten der Geräuschdämpfungsplatte (10) auf dem Rand der Felge (7b) des Rades (7) umfaßt.
